# EUROPEAN PATENT APPLICATION

(11) **EP 2 565 668 A1**
(43) Date of publication of application: **06.03.2013**
(21) Application number: 12181921.3
(22) Date of filing: 27.08.2012
(51) Int. Cl.: G01S 7/10, G01S 13/78, G01S 5/00, G01C 23/00

(54) **Method and apparatus for providing motion cues in compressed displays**

(30) Priority: 30.08.2011 US 201113220993
(71) Applicant: Honeywell International Inc., Morristown, NJ 07962-2245 (US)
(72) Inventor: Rogers, William, Morristown, NJ New Jersey 07962-2245 (US)
(74) Representative: Houghton, Mark Phillip

(57) **Abstract**

An apparatus and method are provided for highlighting a moving object in a compressed visual display. The object and a visual cue indicating motion is displayed in a compressed portion of a display having an adjacent uncompressed portion.

## Description

### TECHNICAL FIELD

The exemplary embodiments described herein generally relate to visual displays and more particularly to a method and system for providing motion situation awareness on displays having the image in the compressed periphery of the display.

### BACKGROUND

World wide air traffic is projected to double every ten to fourteen years and the International Civil Aviation Organization (ICAO) forecasts world air travel growth of five percent per annum until the year 2020. Such growth may cause degradation in performance and an increase in an already high workload of the flight crew. One negative influence on flight performance has been the ability for the aircrew to view images on a display without degrading their ability to give the required attention to matters outside the aircraft. The ability to easily and quickly determine motion of an object in the image on the display while simultaneously looking out the windscreen can significantly improve situational awareness of the flight crew resulting in increased flight safety and performance by reducing the flight crew workload.

Furthermore, it is important for pilots to know the movement of other aircraft, for example, when airborne and the movement of all vehicles on the taxiways and runways when taxing for takeoff or from landing. Visually detecting other moving aircraft when airborne and other moving vehicles during navigation of an airport surface (taxiways/runways) can be difficult from a pilot's workload perspective and degradations are undesirable from an aviation safety perspective, especially in limited visibility of night and/or weather, or at unfamiliar airports. A decrease in pilot workload typically results in increased safety: it is advantageous for the pilot to have more time to view critical events occurring outside the aircraft. Undesired results include not being made aware of a moving vehicle.

Electronic instrumentation displays continue to advance in sophistication, achieving increasingly higher levels of information density and, consequently, presenting a greater amount of visual information to be perceived and understood by the operator, e.g., pilot. Furthermore, displays generally present an image having a limited number of degrees in the horizontal direction (earth's horizon) of the 360 degrees available. Some conventional displays provide a non-linear compression of the horizontal field of view for a wide angle display, keeping the center of the display uncompressed, while progressively increasing the compression of the image in the horizontal periphery to increase the number of horizontal degrees displayed. However, moving objects such as vehicles and aircraft are distorted in the compressed portion of the display, appearing smaller and slower.

It typically is difficult to determine that an object is moving in relation to the background, especially when viewed from a moving vehicle, since the background is moving in relation to the moving vehicle. For example, if the object is detected by radar, an algorithm is required to determine that the object is moving relative to the movement of the vehicle.

Accordingly, it is desirable to provide a method for determining and displaying movement of other vehicles in the compressed portion of a display. Furthermore, other desirable features and characteristics of the exemplary embodiments will become apparent from the subsequent detailed description and the appended claims, taken in conjunction with the accompanying drawings and the foregoing technical field and background.

### BRIEF SUMMARY

A method and system are provided for displaying a moving object and a motion cue indicating motion of the object in a compressed portion of a display. A first exemplary embodiment includes receiving data from an air traffic management surveillance system indicating motion of the moving object; determining a motion cue for the moving object; and displaying the moving object with the motion cue in the compressed portion adjacent an uncompressed portion of the display.

A second exemplary embodiment includes receiving data from an air traffic management surveillance system indicating motion of the object; and displaying the moving object with a motion cue in one of two compressed periphery portions on opposed sides of an uncompressed portion.

A third exemplary embodiment is a display system for displaying motion cues, including a data link unit configured to receive air traffic management surveillance system motion parameters of an object; a display configured to provide an image comprising an uncompressed portion and first and second compressed portions on opposed sides of the uncompressed portion; and a computer configured to receive the motion parameters from the data link unit and provide commands to the display to display, in one of the first and second compressed portions, the object and a motion cue indicating motion of the object.

### BRIEF DESCRIPTION OF THE DRAWINGS

The present invention will hereinafter be described in conjunction with the following drawing figures, wherein like numerals denote like elements, and

FIG. 1 is a functional block diagram of an aircraft flight system;

FIG. 2 is a flow chart of a method in accordance with an exemplary embodiment;

FIG. 3 is a schematic representation of a known first compressed image;

FIG. 4 is a schematic representation of a known second compressed image;

FIG. 5 is a first uncompressed image displayed in a known manner;

FIG. 6 is an image displayed in accordance with an exemplary embodiment; and

FIG. 7 is another image displayed in accordance with the exemplary embodiment.

### DETAILED DESCRIPTION

The following detailed description is merely illustrative in nature and is not intended to limit the embodiments of the subject matter or the application and uses of such embodiments. Any implementation described herein as exemplary is not necessarily to be construed as preferred or advantageous over other implementations. Furthermore, there is no intention to be bound by any expressed or implied theory presented in the preceding technical field, background, brief summary, or the following detailed description.

A display system presents images on a screen, viewable by an aircrew member, of other aircraft and terrain when airborne, for example, and taxiways, runways, obstacles, and moving vehicles when taxing. The display includes an uncompressed center section and linearly increasingly compressed side sections on opposed sides of the center section. The portion of the side sections farthest from the center section may be more compressed than the portion of the side sections nearest the center section.

A method and system for increasing the detection of motion in the compressed image portion of the display includes using one or more artificial visual cues to enhance the detection and awareness of moving objects. An air traffic management surveillance system providing, for example, automatic dependent surveillance-broadcast (ADS-B) data related to motion of the objects is received by the system from at least one of a ground station or an airborne craft. In cases where object and object movement are not directly specified (e.g., from a radar image), objects that are moving at a different rate than the rest of the scene (from the pilot's perspective the peripheral scene appears to move or stream due to the movement of the aircraft in which the pilot sits) are identified. The enhancing of the moving vehicles (the relative direction and real closing speed relative to the pilot/aircraft) may include, for example, a pulsating line or arrow (pointing in the direction of movement), increased size which may pulsate between actual size and the increased size, circled with an outline that may blink, and pulsate between normal and reverse video.

In general, the format may include, for example, difference in size, color, or brightness, and may temporally vary in brightness, for example, blinking, flashing, or fading. In one embodiment, the images presented within the aircraft may be responsive to information received from ground control. In yet another embodiment, the images presented within the aircraft may be responsive to information received from another aircraft. In yet another embodiment, the images presented within the aircraft may be responsive to information received from the aircraft's own surveillance systems.

While the exemplary embodiments described herein refer to displaying the information on airborne or ground based aircraft, the invention may also be applied to other exemplary embodiments including any type of mobile vehicle, for example, automobiles, sea going vessels, and displays used by traffic controllers.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

For the sake of brevity, conventional techniques related to graphics and image processing, navigation, flight planning, aircraft controls, aircraft data communication systems, and other functional aspects of certain systems and subsystems (and the individual operating components thereof) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

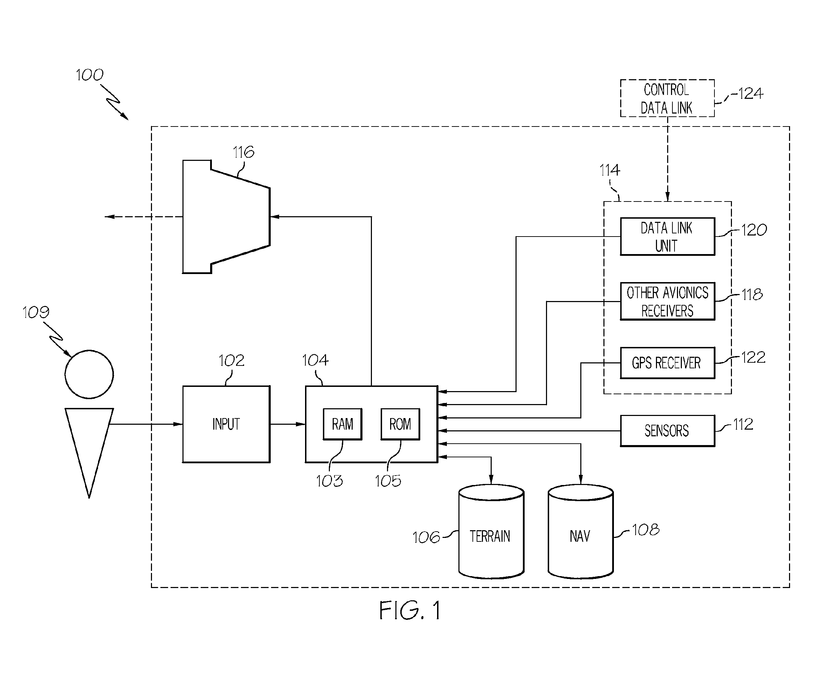

Referring to FIG. 1, an exemplary flight deck display system 100 is depicted and will be described for displaying winds aloft at various altitudes. The system 100 includes a user interface 102, a processor 104, one or more terrain/taxiway databases 106, one or more navigation databases 108, various optional sensors 112, various external data sources 114, and one or more display device 116. In some embodiments the user interface 102 and the display device 116 may be combined in the same device, for example, a touch pad. The user interface 102 is in operable communication with the processor 104 and is configured to receive input from a user 109 (e.g., a pilot) and, in response to the user input, supply command signals to the processor 104. The user interface 102 may be any one, or combination, of various known user interface devices including, but not limited to, a cursor control device (CCD), such as a mouse, a trackball, or joystick, and/or a keyboard, one or more buttons, switches, or knobs.

The processor 104 may be any one of numerous known general-purpose microprocessors or an application specific processor that operates in response to program instructions. In the depicted embodiment, the processor 104 includes on-board RAM (random access memory) 103, and on-board ROM (read only memory) 105. The program instructions that control the processor 104 may be stored in either or both the RAM 103 and the ROM 105. For example, the operating system software may be stored in the ROM 105, whereas various operating mode software routines and various operational parameters may be stored in the RAM 103. It will be appreciated that this is merely exemplary of one scheme for storing operating system software and software routines, and that various other storage schemes may be implemented. It will also be appreciated that the processor 104 may be implemented using various other circuits, not just a programmable processor. For example, digital logic circuits and analog signal processing circuits could also be used.

No matter how the processor 104 is specifically implemented, it is in operable communication with the terrain/taxiway databases 106, the navigation databases 108, and the display device 116, and is coupled to receive various types of inertial data from the various sensors 112, and various other avionics-related data from the external data sources 114. The processor 104 is configured, in response to the inertial data and the avionics-related data, to selectively retrieve terrain data from one or more of the terrain/taxiway databases 106 and navigation data from one or more of the navigation databases 108, and to supply appropriate display commands to the display device 116. The display device 116, in response to the display commands from, for example, a touch screen, keypad, cursor control, line select, concentric knobs, voice control, and datalink message, selectively renders various types of textual, graphic, and/or iconic information. The preferred manner in which the textual, graphic, and/or iconic information are rendered by the display device 116 will be described in more detail further below. Before doing so, however, a brief description of the databases 106, 108, the sensors 112, and the external data sources 114, at least in the depicted embodiment, will be provided.

The display device 116, as noted above, in response to display commands supplied from the processor 104, selectively renders various textual, graphic, and/or iconic information, and thereby supply visual feedback to the user 109. It will be appreciated that the display device 116 may be implemented using any one of numerous known display devices suitable for rendering textual, graphic, and/or iconic information in a format viewable by the user 109. Non-limiting examples of such display devices include various cathode ray tube (CRT) displays, and various flat panel displays such as various types of LCD (liquid crystal display) and TFT (thin film transistor) displays. The display device 116 may additionally be implemented as a panel mounted display, a HUD (head-up display) projection, or any one of numerous known technologies. It is additionally noted that the display device 116 may be configured as any one of numerous types of aircraft flight deck displays. For example, it may be configured as a multi-function display, a horizontal situation indicator, or a vertical situation indicator, just to name a few. In the depicted embodiment, however, the display device 116 is configured as a primary flight display (PFD).

The terrain/taxiway databases 106 include various types of data representative of the surface over which the aircraft is taxing, the terrain over which the aircraft is flying, and the navigation databases 108 include various types of navigation-related data. These navigation-related data include various flight plan related data such as, for example, waypoints, distances between waypoints, headings between waypoints, data related to different airports, navigational aids, obstructions, special use airspace, political boundaries, communication frequencies, and aircraft approach information. It will be appreciated that, although the terrain/taxiway databases 106 and the navigation databases 108 are, for clarity and convenience, shown as being stored separate from the processor 104, all or portions of either or both of these databases 106, 108 could be loaded into the RAM 103, or integrally formed as part of the processor 104, and/or RAM 103, and/or ROM 105. The terrain/taxiway databases 106 and navigation databases 108 could also be part of a device or system that is physically separate from the system 100.

The sensors 112 may be implemented using various types of surveillance sensors, systems, and or subsystems, now known or developed in the future, for supplying various types of surveillance data. The surveillance sensors may also vary, but can include conventional radars, millimeter wave radars, infrared radars, and video cameras. The number and type of external data sources 114 may also vary. For example, the other avionics receivers 118 (or subsystems) may include, for example, a terrain avoidance and warning system (TAWS), a traffic and collision avoidance system (TCAS), a runway awareness and advisory system (RAAS), a flight director, and a navigation computer, just to name a few. However, for ease of description and illustration, only a global position system (GPS) receiver 122 and a datalink unit 120 will be briefly described.

The GPS receiver 122 is a multi-channel receiver, with each channel tuned to receive one or more of the GPS broadcast signals transmitted by the constellation of GPS satellites (not illustrated) orbiting the earth. Each GPS satellite encircles the earth two times each day, and the orbits are arranged so that at least four satellites are always within line of sight from almost anywhere on the earth. The GPS receiver 122, upon receipt of the GPS broadcast signals from at least three, and preferably four, or more of the GPS satellites, determines the distance between the GPS receiver 122 and the GPS satellites and the position of the GPS satellites. Based on these determinations, the GPS receiver 122, using a technique known as trilateration, determines, for example, aircraft position, groundspeed, and ground track angle. These data may be supplied to the processor 104, which may determine aircraft glide slope deviation therefrom. Preferably, however, the GPS receiver 122 is configured to determine, and supply data representative of, aircraft glide slope deviation to the processor 104.

The data linked surveillance information described herein could utilize a variety of inputs that indicate the location and movement of objects moving in the periphery. The data link unit 120 receives data linked surveillance information, preferably ADS-B data, from one of a ground based or airborne control data link 124. ADS-B data is preferred since the data contains information regarding the movement of the detected objects. Other data linked surveillance information from, for example, sensors such as radar, video, and infrared, could be used, but may require another underlying component to extract/detect moving objects. Yet another air traffic management surveillance system could be an RFID tag on ground vehicles.

Far different from radar, which works by bouncing radio waves from fixed terrestrial antennas off of airborne targets and then interpreting the reflected signals, ADS-B uses conventional Global Navigation Satellite System (GNSS) technology and a relatively simple broadcast communications (data) link as its fundamental components. Also, unlike radar, the accuracy of an ADS-B air traffic management surveillance system does not seriously degrade with range, atmospheric conditions, or target altitude and update intervals do not depend on the rotational speed or reliability of mechanical antennas.

In typical applications, the ADS-B capable aircraft uses an ordinary GNSS, for example, GPS or Galileo, receiver to derive its precise position from the GNSS constellation, then combines that position with any number of aircraft parameters, such as speed, heading, altitude and flight number. This information is then simultaneously broadcast to other ADS-B capable aircraft and to ADS-B ground, or satellite communications transceivers which then relay the aircraft's position and additional information to Air Traffic Control centers in real time.

The 978 MHz Universal Access Transceiver ("UAT") variant is also bi-directional and capable of sending real-time Flight Information Services ("FIS-B"), such as weather and other data to aircraft. In some areas, conventional non-ADS-B radar traffic information ("TIS-B") can also be uplinked as well.

ADS-B consists of two different services: ADS-B Out and ADS-B In, and will be replacing radar as the primary surveillance method for controlling aircraft worldwide. In the United States, ADS-B is an integral component of the NextGen National Airspace strategy for upgrading/enhancing aviation infrastructure and operations. ADS-B enhances safety by making an aircraft visible, real time, to ATC and to other appropriately equipped ADS-B aircraft with position and velocity data transmitted every second. ADS-B data can be recorded and downloaded for post flight analysis. ADS-B also provides the data infrastructure for inexpensive flight tracking, planning and dispatch.

The system relies on two avionics components: a high-integrity GPS navigation source and a data link (ADS-B unit). There are several types of certified ADS-B data links, but the most common ones operate at 1090 MHz, essentially a modified Mode S transponder, or at 978 MHz (USA only). The FAA would like to see aircraft that operate below 18,000' use the 978 MHz link since this will help alleviate further congestion of the 1090 MHz frequency.

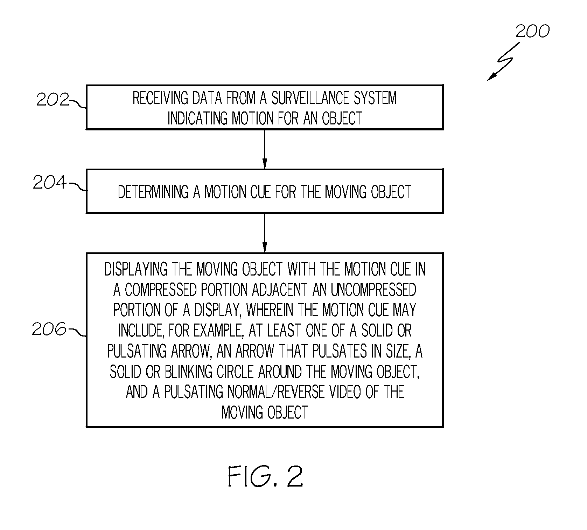

FIG. 2 is a flow chart that illustrates an exemplary embodiment of a compression display process 200 suitable for use with a flight deck display system configured to receive surveillance system data. Process 200 represents one implementation of a method for displaying moving objects on an onboard display of a host aircraft. The various tasks performed in connection with process 200 may be performed by software, hardware, firmware, or any combination thereof. For illustrative purposes, the following description of process 200 may refer to elements mentioned above in connection with FIG. 2. In practice, portions of process 200 may be performed by different elements of the described system, e.g., a processor, a display element, or a data communication component. It should be appreciated that process 200 may include any number of additional or alternative tasks, the tasks shown in FIG. 2 need not be performed in the illustrated order, and process 200 may be incorporated into a more comprehensive procedure or process having additional functionality not described in detail herein. Moreover, one or more of the tasks shown in FIG. 2 could be omitted from an embodiment of the process 200 as long as the intended overall functionality remains intact.

Referring to FIG. 2, the method 200 in accordance with an exemplary embodiment includes receiving 202 surveillance system data indicating motion for an object, determining 204 a motion cue for the moving object, and displaying 206 the moving object with the motion cue in a compressed portion adjacent an uncompressed portion of a display. While there are many known motion cues that may be used, a few include a solid or pulsating on and off arrow, an arrow that pulsates in size, a solid or blinking circle around the object, and a pulsating normal/reverse video of the moving object.

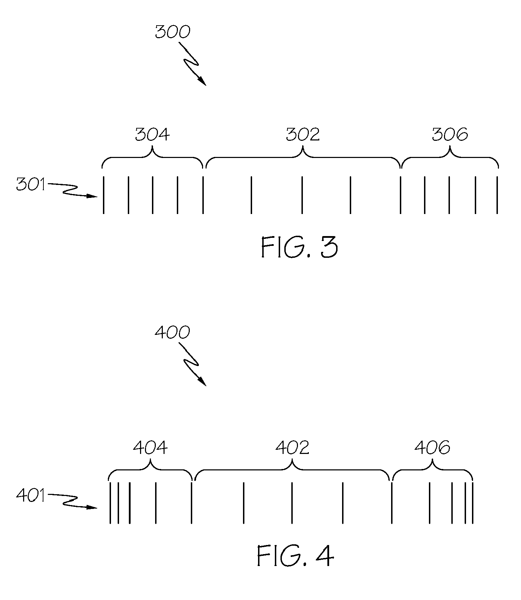

FIGS. 3 and 4 are representations of the compression that may be used. The representation 300 of FIG. 3 comprises a center uncompressed portion 302 that displays objects in a normal dimensional relationship wherein the lines 301 representing distance are equally spaced apart (the distance between adjacent lines is the same). Two peripheral portions 304, 306 are on opposed sides of the center uncompressed portion 302. The lines 301 representing distance of the peripheral portions 304, 306 are equally spaced apart, but at half the distance (a 2X compression) to the lines 301 of the center uncompressed portion 302.

The representation 400 of FIG. 4 comprises a center uncompressed portion 402 that displays objects in a normal dimensional relationship wherein the lines 401 representing distance are equally spaced apart. Two peripheral portions 404, 406 are on opposed sides of the center uncompressed portion 402. The lines 401 representing distance of the peripheral portions 404, 406 are spaced apart, but spaced closer together the farther from the center uncompressed portion 402 (a linear compression). Stated otherwise, the compression increases as the distance from the center portion 402 increases.

The compression representations 300, 400 of FIGS. 3 and 4 are examples of a number of compression styles that may be used with the exemplary embodiments. While the number of degrees may vary, it is preferred that the center uncompressed portion 302, 402 comprises about 60 degrees of the possible 360 degrees and the peripheral portions 304, 306 each comprise 20 degrees with a 2X compression such that 40 degrees of visual information is available on each side. This compression (FIG. 3) results in an equivalent view of 140 degrees displayed. Since the compression portions 404, 406 are not linear, the compression results in a larger number of degrees displayed. Furthermore, while two peripheral portions 302, 304, 402, 404 are shown in the examples, only one of the peripheral portion 304, 306, 404, 406 need be used in some exemplary embodiments.

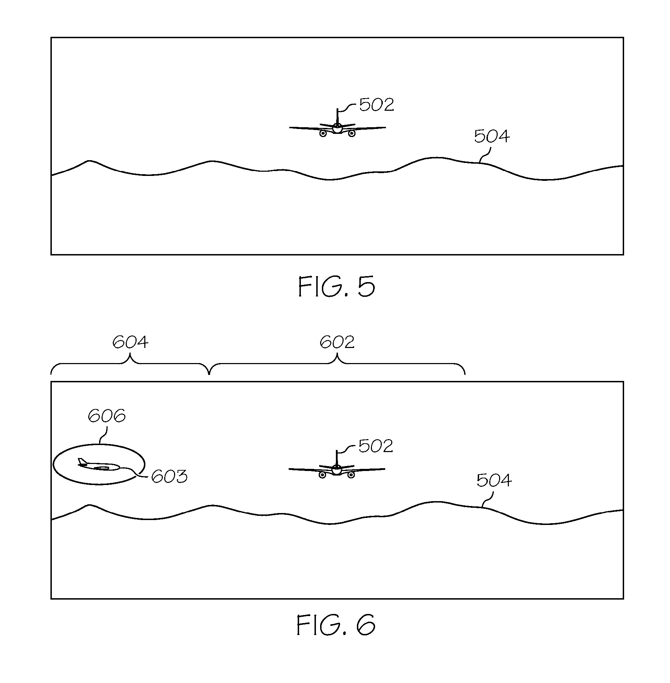

FIG. 5 is a previously known display 500 displaying only an uncompressed image of an airborne aircraft 502 (as displayed in another airborne aircraft having the display 500 onboard). The visual range along the horizon 504 typically is about 60 degrees. No other aircraft are in range of the 60 degree display.

FIG. 6 is a display 600 in accordance with an exemplary embodiment shown the aircraft 502 in a center uncompressed portion 602, and another aircraft 603 in a compressed portion 604 in the left periphery. Compressing the display allows for a wider range of vision, although the aircraft 603 is actually larger than displayed due to the compression. A motion cue 606 is displayed contiguous to the aircraft 603 to indicate that the aircraft 603 is moving in relation to the "space" occupied by the aircraft 603 as determined by the surveillance system data. In this case, the motion cue 606 is a circle around the aircraft 603. The motion cue 606 alternatively may be one of several different formats, for example, blinking, highlighted, or of a different color. Other examples of motion cues include a solid or pulsating arrow, an arrow that pulsates in size, and a pulsating normal/reverse video of the aircraft 603.

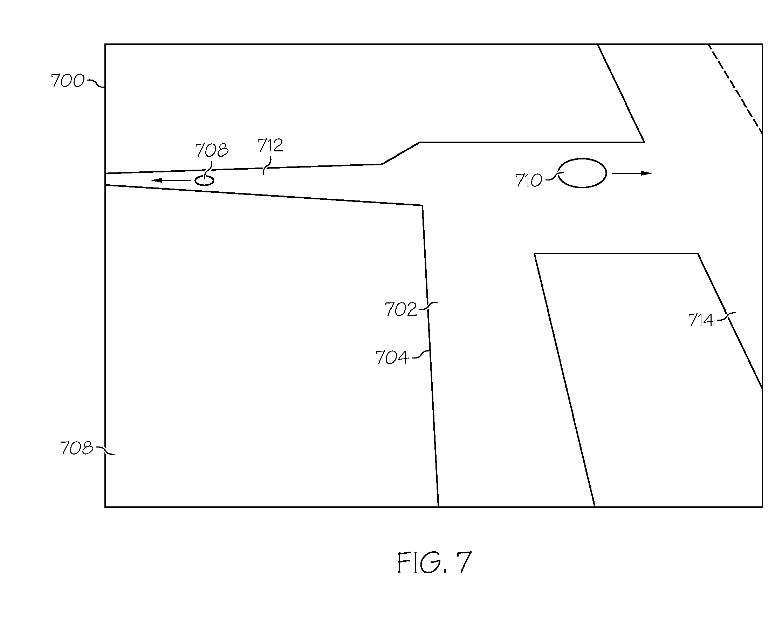

Referring to FIG. 7, as the pilot taxies the aircraft on the taxiway 702, an image (video) of the taxiway 702 and optionally other taxiways 712 or a runway 714 are presented on the display 700. The display 700 includes the taxiway 702, boundaries 704 of the taxiway 702, taxiway 712, runway 714, truck 708, and aircraft 710. Obstacles, such as a truck 708 and an aircraft 710, are, for example, shown as a threat circle. An arrow protruding from the circles 708, 710 indicate any movement of the obstacle 708, 710. For example, the truck 708 is moving to the left away from the taxiway 702 and the aircraft 710 is moving towards/onto the runway 714.

In summary, motion of an object is determined from data received from a surveillance system. A visual cue is displayed with the moving object in the compressed portion of a display.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims.

## Claims

1. A method of displaying a moving object in a compressed portion of an image on a display, comprising:
receiving data from a surveillance system indicating motion of the moving object;
determining a motion cue for the moving object; and
displaying the moving object with the motion cue in the compressed portion adjacent an uncompressed portion of the display.

2. The method of claim 1 wherein the receiving step comprises receiving data from an automatic dependent surveillance-broadcast system.

3. The method of claim 1 wherein the displaying step comprises displaying the motion cue indicating a direction in which the object is moving.

4. The method of claim 1 wherein the displaying step comprises displaying an uncompressed portion of a 60 degree arc.

5. The method of claim 4 wherein the displaying step comprises displaying in the first and second compressed portions each comprising a 40 degree arc when compressed in relation to the uncompressed portion by a factor of two.

6. The method of claim 1 wherein the displaying step comprises displaying on a display system of an aircraft.

7. The method of claim 1 wherein the displaying step comprises displaying the motion cue selected from the group consisting of at least one of an arrow, an increased size of the object, a circle around the object, and the object pulsating between normal and reverse video.

8. A display system for displaying motion cues, comprising:
a data link unit configured to receive air traffic management surveillance system motion parameters of an object;
a display configured to provide an image comprising an uncompressed portion and first and second compressed portions on opposed sides of the uncompressed portion; and
a computer configured to receive the motion parameters from the data link unit and provide commands to the display to display, in one of the first and second compressed portions, the object and a motion cue indicating motion of the object.

9. The display system of claim 8 wherein the motion cue comprises a motion cue indicating direction of the object.

10. The display system of claim 8 wherein the uncompressed portion of the display comprises a 60 degree arc of a possible 360 degrees.

11. The display system of claim 10 wherein the first and second compressed portions each comprise a 40 degree arc of a possible 360 degrees when compressed in relation to the uncompressed portion by a factor of 2.

12. The display system of claim 8 wherein the display comprises a display system of an aircraft.

13. The display system of claim 8 wherein the computer is further configured to display the motion cue selected from the group consisting of at least one of an arrow, an increased size of the object, a circle around the object, and the object pulsating between normal and reverse video.
